**Europäisches Patentamt**

**European Patent Office**

**Office européen des brevets**

(19)

(11) Veröffentlichungsnummer: **0 012 857**
**B1**

(12)

# EUROPÄISCHE PATENTSCHRIFT

(45) Veröffentlichungstag der Patentschrift:
**20.01.82**

(51) Int. Cl.³: **F 23 C 11/02**

(21) Anmeldenummer: **79104700.4**

(22) Anmeldetag: **27.11.79**

(54) **Wirbelschichtfeuerung für Zentralheizungskessel.**

(30) Priorität: **30.12.78 DE 2856870**

(43) Veröffentlichungstag der Anmeldung:
**09.07.80 Patentblatt 80/14**

(45) Bekanntmachung des Hinweises auf die Patenterteilung:
**20.01.82 Patentblatt 82/3**

(84) Benannte Vertragsstaaten:
**BE CH FR GB LU NL**

(56) Entgegenhaltungen:
**DE-A1-2 452 190**
**DE-A1-2 523 109**
**DE-A1-2 605 886**
**FR-A-2 245 914**
**FR-A-2 398 967**
**GB-A-1 425 704**
**US-A-3 717 700**
**US-A-3 996 863**

(73) Patentinhaber: **Bergwerksverband GmbH,**
**Franz-Fischer-Weg 61, D-4300 Essen 13 (DE)**

(72) Erfinder: **Schilling, Hans-Dieter, Dr., Pastoratsweg 43,**
**D-4320 Hattingen 16 (DE)**
Erfinder: **Lammermann, Walter,**
**Geschwister-Scholl-Strasse 13, D-4300 Essen 14 (DE)**

Wirbelschichtfeuerung für Zentralheizungskessel

Die Erfindung betrifft eine Wirbelschichtfeuerung für Zentralheizungskessel gemäss dem Oberbegriff von Anspruch 1.

Es sind bereits eine grosse Zahl von Heizkesseln für den Hausbrand bekannt, in denen feste Brennstoffe verbrannt werden können. Die Feuerungen in diesen Heizkesseln arbeiten mit einem ruhenden oder nur langsam durch einen Wanderrost oder Schüttelrost bewegten Glutbett. Die Wärmeübertragung an das Heizwasser erfolgt fast ausschliesslich durch in den Rauchgaszügen angebrachte Rohrregister. Diese Anordnung erfordert wegen der verhältnismässig kleinen Wärmeübergangszahl vom Rauchgas an das Heizwasser grosse Wärmeaustauschflächen. Dazu kommt als weiterer Nachteil, dass sich die Luftverteilung dem zeitlichen und örtlichen Ablauf des Verbrennungsvorganges nur begrenzt anpassen lässt. Ebenso wirkt sich die hohe Schadstoffemission nachteilig aus, da sie entweder zum Einsatz hochwertiger Brennstoffe zwingt oder zu einer hohen Umweltbelastung führt.

Es sind weitere Dampfkessel mit Wirbelschichtfeuerung bekannt. Hierbei handelt es sich um eine Hochleistungsfeuerung für Heizkraftwerke, z.B. für Fernwärme, oder Grosskraftwerke zur Stromerzeugung. Bei diesen Dampfkesseln werden Kohle und Kalkstein in einem Luftstrom dosiert und in die Wirbelschicht eingeblasen. Die Verbrennungsluft durchströmt die Wirbelschicht; die durch die Verbrennung entstehende Wärme wird durch dicht angeordnete Heizrohre abgeführt. Das Abgas, das noch etwa die Temperatur der Wirbelschicht hat, wird durch konventionelle, im Gasraum angebrachte Konvektionsheizbündel abgekühlt. Der erzeugte Dampf wird einem konventionellen Dampfturbinenprozess zur Stromerzeugung zugeführt. Das Abgas wird vom mitgeführten Staub befreit, der erneut der Wirbelschicht zugeführt wird, da er meist noch einen kleinen Teil an unverbranntem Kohlenstoff enthält (Glückauf 114 (1978) Nr.3, Seite 142/147). Diese Wirbelschichtfeuerungen befinden sich aber noch in der Entwicklung und haben sich grosstechnisch noch nicht durchgesetzt.

Aus der US-A- Nr. 3996863 ist es auch bekannt, bei Wirbelschichtfeuerungen den Wärmetauscher zumindest teilweise permanent im Wirbelschichtmaterial eingetaucht zu belassen; dabei befindet sich im Ruhezustand der Wirbelschicht bevorzugt der Einlass- oder Auslassbereich des Wärmetauschers innerhalb des Wirbelschichtmaterials. Hier muss ein schräg von oben auf das Wirbelschichtmaterial weisender Brenner vorhanden sein, der ein Entzünden bzw. ein Hochfahren vom Ruhezustand zum Vollastzustand ermöglicht, da das Wirbelschichtmaterial im Ruhezustand zwangsläufig stark auskühlt, wenn das Wärmeträgerfluid zur Vermeidung von Überhitzung weiter durch den Wärmetauscher strömt.

In den Heizungsbau hat die Wirbelschichttechnik noch keinen Eingang gefunden. Ein Grund mag die Trägheit dieser Feuerungsart sein, sich einem rasch wechselnden Wärmebedarf anzupassen. Dieser Umstand rührt daher, dass bei den bekannten Wirbelschichtfeuerungen der Dampf für den Dampfturbinenprozess in den ständig in die Wirbelschicht eintauchenden Rohrbündeln erzeugt wird.

Der Erfindung liegt die Aufgabe zugrunde, eine umweltfreundliche und flexible Wirbelschichtfeuerung für Zentralheizungskessel zu schaffen; dabei soll sich die Wirbelschichtfeuerung rasch einem sich ändernden Wärmebedarf anpassen und über einen grossen Lastbereich regeln lassen, und es ist bei geringem Wärmebedarf, etwa bei der Nachtabsenkung, eine Überhitzung und Verdampfung des Heizwassers zu vermeiden.

Diese Aufgabe wird erfindungsgemäss durch die kennzeichnenden Merkmale des Anspruches 1 gelöst.

Die Erfindung nutzt den Umstand aus, dass sich das Volumen des Wirbelschichtmaterials bei der Fluidisierung gegenüber dem Ruhezustand bis zu etwa 40% ausdehnt. Die Anordnung des Wärmetauschers in dieser Expansionszone der Wirbelschicht bewirkt, dass der Wärmetauscher bei Absperren der Verbrennungsluft, die gleichzeitig der Fluidisierung des Wirbelschichtmaterials dient, aus dem Wirbelschichtmaterial auftaucht, so dass keine Wärmeübertragung mit letzterem mehr stattfindet. Dadurch wird verhindert, dass das Heizungswasser im Wärmetauscher im Ruhezustand der Wirbelschicht verdampft. Durch eine geeignete Isolierschicht des Heizkessels wird jedoch sichergestellt, dass das Wirbelschichtmaterial auch bei einem längeren Ruhezustand auf hoher Temperatur gehalten wird.

Der Wärmetauscher wird erfindungsgemäss waagerecht oder senkrecht im Heizkessel oberhalb des ruhenden Wirbelschichtmaterials angeordnet. Es werden deshalb zur Wärmeübertragung von Wirbelschichtmaterial auf einen Wasserkreislauf erfindungsgemäss Rohrbündel oder Wärmerohre verwendet. Wichtig ist, dass die Wärmeübertragung nur im aufgewirbelten Zustand stattfindet. Der Heizkessel kann rund oder rechteckig sein. Die heissen Abgase werden im Freiraum über der Wirbelschicht mittels eines Konventionswärmetauschers abgekühlt. Dieser Wärmetauscher kann z.B. als Rohrbündel-, Platten- oder Taschenwärmetauscher ausgebildet sein.

Ausserdem sind zur Regelung der Wirbelschichthöhe in den verschiedenen Lastzuständen ein oder mehrere Überlaufrohre mit Absperrschiebern oder -ventilen in unterschiedlicher Höhe am Heizkessel angeordnet.

Zur Regelung der Feuerung weist der Heizkessel erfindungsgemäss einen konischen oder stufenförmigen Anströmboden mit jeweils einem waagerechten Abschnitt in der Spitze auf. In diesem Fall ist erfindungsgemäss ein kleiner Teil des Wärmetauschers mäanderartig nach unten zur Spitze des Anströmbodens hin geführt und befindet sich dabei im Ruhezustand der Wirbelschicht oberhalb des ruhenden Wirbelschichtmaterials. Dabei ist vorteilhafterweise der Anströmboden in mehrere Anströmabschnitte unterteilt, denen Drosselklappen zur Regelung des Verbrennungsluftstromes zugeordnet sind.

Ausführungsbeispiele der erfindungsgemässen Wirbelschichtfeuerung sind in der Zeichnung schematisch dargestellt und werden im folgenden unter besonderer Berücksichtigung der Regelmechanismen beim Hoch- und Herunterfahren des Heizkessels näher beschrieben.
Es zeigt:

Fig. 1 eine Wirbelschichtfeuerung mit waagerechtem Anströmboden im Längsschnitt;

Fig. 2 eine Wirbelschichtfeuerung mit konischem Anströmboden im Längsschnitt;

Fig. 3 eine Wirbelschichtfeuerung mit stufenförmigem Anströmboden im Längsschnitt und

Fig. 4 eine Wirbelschichtfeuerung mit Wärmerohren als Wärmetauscher im Längsschnitt.

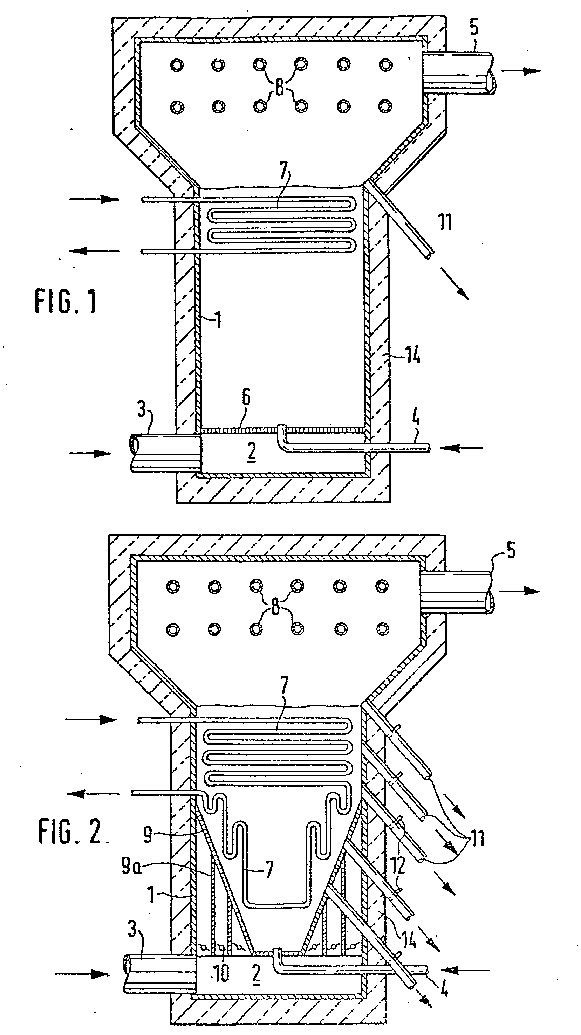

Nach Fig. 1 besteht die erfindungsgemässe Wirbelschichtfeuerung aus einem Heizkessel 1, in dem oberhalb einer Verteilerkammer 2 ein waagerechter Anströmboden 6 angeordnet ist. Feinkohle und evtl. gemahlener Kalkstein werden in einem Förderluftstrom dosiert und durch eine Leitung 4 der Wirbelschicht zugeführt, während die Verbrennungsluft, die das Wirbelschichtmaterial durchströmt und dabei fluidisiert, der Verteilerkammer 2 durch das Rohr 3 zugeführt wird. Oberhalb des ruhenden Wirbelschichtmaterials ist ein wasserdurchflossener Wärmetauscher 7 so angebracht, dass er nur im Wirbelzustand des Materials in die Wirbelschicht eintaucht. Die Wirbelschichthöhe wird mit einem Überlaufrohr 11, durch das die Asche abfliesst, auf konstanter Höhe gehalten. Durch den Wärmetauscher 7 wird die durch die Verbrennung entstehende Wärme abgeführt. Das Abgas, das noch etwa die Temperatur der Wirbelschicht hat, wird durch im Gasraum angebrachte Konvektionsheizbündel 8 abgekühlt und verlässt den Heizkessel 1 durch den Abzug 5.

Fig. 2 zeigt einen besser regelbaren Heizkessel, bei dem im Heizkessel 1 ein konischer Anströmboden 9 mit einem waagerechten Bodenteil angeordnet ist. Der Anströmboden 9 ist durch mit der Verteilerkammer 2 verbundene Zwischenwände 9a in einzelne Abschnitte aufgeteilt, in denen der Luftstrom mittels Drosselklappen 10 getrennt geregelt werden kann. Der Wärmetauscher 7 ist bei dieser Ausführungsform mäanderartig bis an den Boden geführt worden. Die Höhe der Wirbelschicht wird durch ein System von in unterschiedlicher Höhe angebrachten Überlaufrohren 11, die mit Absperrschiebern oder -ventilen 12 versehen sind, dem jeweiligen Leistungsbedarf angepasst. Auf diese Weise ist der Wärmetauscher 7 so angebracht, dass er im Ruhezustand der Wirbelschicht oberhalb des Wirbelschichtmaterials liegt.

Bei einem solchen mehrstufigen Wirbelschichtheizkessel werden zum Hochfahren des Kessels von der niedrigsten zur höchsten Laststufe die Absperrschieber 12 der Überlaufrohre 11 geschlossen, ausgenommen der Absperrschieber 12, der zu der gewünschten Laststufe gehört. Durch eine Steigerung der bisherigen Brennstoffzufuhr wächst dann die Höhe der Wirbelschicht, bis sie das offene Überlaufrohr 11 erreicht. Mit der Erhöhung der Brennstoffzufuhr wird gleichzeitig auch die Zufuhr an Verbrennungsluft durch das Rohr 3 erhöht. Beim Erreichen einer bestimmten Höhe öffnen sich die vorher geschlossenen Drosselklappen 10, und zwar von innen nach aussen, wodurch eine stufenweise Vergrösserung des Anströmbodens und damit trotz höherem Luftdurchsatz eine konstante Anströmgeschwindigkeit erreicht wird.

Das Herunterfahren auf eine niedrigere Laststufe kann auf zweierlei Weise erfolgen. Beim langsamen Herunterfahren verläuft das Regeln in umgekehrter Reihenfolge wie beim Hochfahren, das heisst, die Absperrschieber 12 der Überlaufrohre 11 werden nacheinander von oben nach unten geöffnet und die Brennstoff- und Luftzufuhr wird langsam zurückgenommen. Beim schnellen Herunterfahren des Heizkessels werden mehrere oder alle Absperrschieber 12 der Überlaufrohre 11 gleichzeitig geöffnet und die Brennstoff- und Luftzufuhr wird schnell gedrosselt. Eine gute Isolierung 14 sorgt beim Heizkessel 1 dafür, dass er in diesem Zustand, beispielsweise bei der Nachtabsenkung, nicht zuviel Wärme verliert.

Beim Anfahren des Heizkessels kann aus den Überlaufrohren 11 abgelassenes Wirbelschichtmaterial, im wesentlichen Asche und gegebenenfalls Sand oder anderes Inertmaterial, vorgelegt werden. Dieser Sand wird je nach der Betriebsdauer des Heizkessels nach und nach gegen Asche ausgetauscht sein.

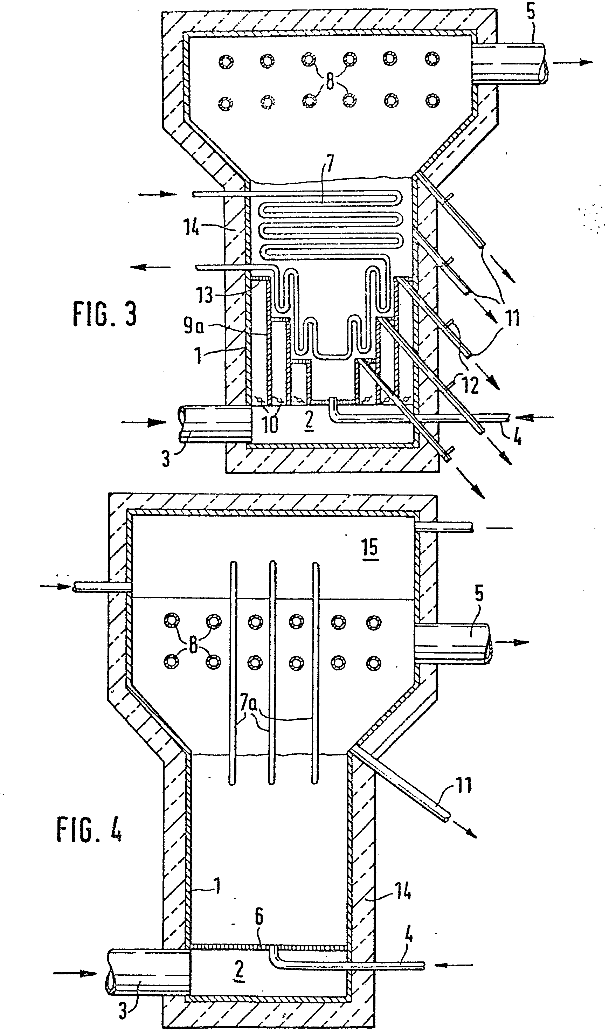

Der in Fig. 3 dargestellte Heizkessel mit einem stufenförmigen Anströmboden 13 stellt eine Variante des Heizkessels nach Fig. 2 dar. Auch bei dieser Ausführung des Heizkessels besteht die Möglichkeit, den Kessel mit verschiedenen Laststufen zu fahren.

Nach Fig. 4 ist der Wärmetauscher 7 des Heizkessels 1 durch Wärmerohre 7a, deren untere Enden bis in die Expansionszone der Wirbelschicht reichen, in Verbindung mit einem Wasserkasten 15 ausgebildet, in den die oberen Enden der Wärmerohre 7a reichen. Beim Betrieb der Wirbelschicht verdampft die im unteren Teil der Wärmerohre 7a befindliche Flüssigkeit. Der Dampf steigt in den Rohren nach oben und kondensiert am oberen kälteren Ende wieder. Die dabei freiwerdende Kondensationswärme heizt das im Wasserkasten 15 befindliche Heizwasser auf.

Die Anwendung der Wirbelschichttechnik auf Heizkessel bringt wegen des grossen Wärmeübergangswertes in der Wirbelschicht den Vorteil, dass man eine Verkleinerung der Wärmetauschflächen vornehmen kann. Ausserdem kann ein grosser Teil des Brennstoffschwefels durch Zugabe von Kalkstein, der mit der Kohle vom Förderluftstrom in die Feuerung eingebracht wird, in der Wirbelschicht gebunden werden. Der entstehende Gips wird mit der Asche aus der Feuerung ausgetragen. Die vergleichsweise niedrigen Temperaturen in der Wirbelschichtfeuerung reduzieren zudem die Bildung von Stickoxiden. Somit ist der Wirbelschichtkessel wesentlich umweltfreundlicher als die herkömmlichen Heizkessel.

## Patentansprüche

1. Wirbelschichtfeuerung für unter schnell wechselnden Lastanforderungen stehenden Zentralheizungskessel mit feinkörnigen festen Brennstoffen mittels einer auf einem Anströmboden befindlichen Wirbelschicht, die schnell vom Ruhezustand auf Vollast hochfahrbar ist, dadurch gekennzeichnet, dass sich der im Heizkessel (1) angeordnete Wärmetauscher (7) im Ruhezustand der Wirbelschicht derart oberhalb des ruhenden Wirbelschichtmaterials befindet, dass keine Wärmeübertragung mit letzterem stattfindet.

2. Feuerung nach Anspruch 1, dadurch gekennzeichnet, dass der Wärmetauscher (7) waagerecht oder senkrecht im Heizkessel (1) angeordnet ist.

3. Feuerung nach Ansprüchen 1 und 2, dadurch gekennzeichnet, dass der Wärmetauscher (7) durch Wärmerohre gebildet ist.

4. Feuerung nach Ansprüchen 1 bis 3, dadurch gekennzeichnet, dass der Heizkessel (1) mit einer Wärmeisolierschicht (14) versehen ist.

5. Feuerung nach Ansprüchen 1 bis 4, dadurch gekennzeichnet, dass ein oder mehrere Überlaufrohre (11) mit Absperrschiebern oder -ventilen (12) in unterschiedlicher Höhe am Heizkessel (1) angeordnet sind.

6. Feuerung nach Anspruch 5, dadurch gekennzeichnet, dass der Heizkessel (1) einen konischen Anströmboden (9) oder stufenförmigen Anströmboden (13) mit jeweils einem waagerechten Abschnitt in der Spitze aufweist.

7. Feuerung nach Anspruch 6, dadurch gekennzeichnet, dass der Wärmetauscher (7) mäanderartig nach unten zur Spitze des Anströmbodens hin geführt ist und sich dabei im Ruhezustand der Wirbelschicht oberhalb des ruhenden Wirbelschichtmaterials befindet.

8. Feuerung nach einem der beiden Ansprüchen 6 oder 7, dadurch gekennzeichnet, dass der Anströmboden (9) oder (13) in mehrere Anströmabschnitte unterteilt ist, denen Drosselklappen (10) zugeordnet sind.

## Claims

1. A fluidized bed furnace for central heating boilers which are subject to rapidly altering load requirements, having fine-grained solid fuel, by means of a fluidized bed which is located on an inflow base and can be rapidly accelerated from rest state to full load, characterized in that the heat exchanger (7) disposed in the boiler (1) in the rest state of the fluidized bed is located above the static fluidized bed material in such a manner that no heat transfert with the latter occurs.

2. A furnace according to claim 1, characterized in that the heat exchanger (7) is disposed horizontally or vertically in the boiler (1).

3. A furnace according to claims 1 and 2, characterized in that the heat exchanger (7) is formed by heat pipes.

4. A furnace according to claims 1 to 3, characterized in that the boiler (1) is provided with a heat insulating layer (14).

5. A furnace according to claim 1 to 4, charactetized in that one or more overflow pipes (11) with shut-off slides or valves (12) are disposed at various levels on the boiler (1).

6. A furnace according to claim 5, characterized in that the boiler (1) comprises a conical inflow base (9) or a stepped inflow base (13) with a horizontal section at the summit in each case.

7. A furnace according to claim 6, characterized in that the heat exchanger (7) is downwardly directed in a meander-like manner towards the summit of the inflow base and is thereby located above the static fluidized material in the rest state of the fluidized bed.

8. A furnace according to claim 6 or 7, characterized in that the inflow base (9 or 13) is divided into a plurality of inflow sections with which throttle valves (10) are associated.

## Revendications

1. Foyer à couche turbulente pour chaudière de chauffage central soumises à des exigences de charge rapidement variables, utilisant des combustibles à grain fin avec une couche turbulente placée sur un fond de soufflage et qui peut être montée rapidement de l'état de repos à la pleine charge, caractérisé en ce que, à l'état de repos de la couche turbulente, l'échangeur de chaleur (7) disposé dans la chaudière (1) se trouve au-dessus de la matière immobile de la couche turbulente de telle manière qu'il ne se produise pas de transmission de chaleur avec cet échangeur de chaleur.

2. Foyer suivant la revendication 1, caractérisé en ce que l'échangeur de chaleur (7) est disposé horizontalement ou verticalement dans la chaudière (1).

3. Foyer suivant les revendications 1 et 2, caractérisé en ce que l'échangeur de chaleur (7) est formé de tubes de chaleur.

4. Foyer suivant les revendications 1 à 3, caractérisé en ce que la chaudière (1) est munie d'une couche isolante de la chaleur (14).

5. Foyer suivant les revendications 1 à 4, caractérisé en ce qu'un ou plusieurs tubes de trop-plein (11) munis de vannes ou clapets d'arrêt (12) sont montés sur la chaudière (1) à différents niveaux.

6. Foyer suivant la revendication 5, caractérisé en ce que la chaudière (1) comprend un fond de soufflage (9) conique ou en escalier (13) avec, dans chaque cas, un segment horizontal dans la pointe.

7. Foyer suivant la revendication 6, caractérisé en ce que l'échangeur de chaleur (7) se prolonge avec une forme ondulée vers le bas, vers la pointe du fond de soufflage et, dans l'état de repos de la couche turbulente, se trouve au-dessus de la matière immobile de la couche turbulente.

8. Foyer suivant l'une des revendications 6 ou 7, caractérisé en ce que le fond de soufflage (9 ou 13) est divisé en plusieurs compartiments de soufflage auxquels sont associés des volets d'étranglement (10).

FIG. 1

FIG. 2

FIG. 3

FIG. 4